## Europäisches Patentamt
## European Patent Office
## Office européen des brevets

(19)

(11) Numéro de publication: **0 002 419**
**B1**

(12)

# FASCICULE DE BREVET EUROPEEN

(45) Date de publication du fascicule de brevet:
14.01.81

(51) Int. Cl.³: **B 23 K 35/30**, B 23 K 20/16

(21) Numéro de dépôt: 78420015.6

(22) Date de dépôt: 01.12.78

(54) Procédé d'assemblage de pièces à base d'aluminium et de pièces en acier.

(30) Priorité: 07.12.77 FR 7737751

(43) Date de publication de la demande
13.06.79 Bulletin 79/12

(45) Mention de la délivrance du brevet:
14.01.81 Bulletin 81/2

(84) Etats contractants désignés:
DE GB NL

(56) Documents cités:
**AU-B-474 203**
**MACHINERY AND PRODUCTION ENGINEE-RING,
vol. 130, 26 janvier 1977,
»Silicon bonding of aluminium«
pages 91—92**

(73) Titulaire: **SOCIETE DE VENTE DE L'ALUMINIUM PECHINEY, 23 bis, rue Balzac, F-75360 Paris Cedex 08 (FR)**

(72) Inventeur: **Salesse, Marc, Résidence Saint-Mury Barnave, F-38240 Meylan (FR)**
Inventeur: **Klein, Dominique, 14 rue du Port, F-80400 Ham (FR)**

(74) Mandataire: **Pascaud, Claude et al, PECHINEY UGINE KUHLMANN 28, rue de Bonnel, F-69433 Lyon Cedex 3 (FR)**

BUNDESDRUCKEREI BERLIN

## Procédé d'assemblage de pièces à base d'aluminium et de pièces en acier

La présente invention se rapporte à un procédé d'assemblage par pression à chaud d'une pièce à base d'aluminium et d'une pièce à base de fer, toutes deux pouvant présenter des formes variées telles que, par exemple, plaques, barres, tôles, ronds, tiges, bossages etc... Elle couvre, d'une part, les pièces constituées soit d'aluminium de qualité courante ou raffinée, soit d'alliages formés avec ce métal, d'autre part, les pièces réalisées soit en fer, soit en un de ses dérivés, qu'il s'agisse de fonte ou d'acier allié ou non à d'autres métaux. Dans la suite du texte, nous utiliserons le terme »acier« pour désigner indistinctement le fer et ses dérivés.

Ce procédé d'assemblage consiste à rendre les pièces solidaires l'une de l'autre par la réalisation d'une continuité entre une ou plusieurs de leurs faces, de façon à obtenir un ensemble présentant une bonne tenue mécanique et une faible résistance électrique.

Pour réaliser l'assemblage d'une pièce à base d'aluminium et d'une pièce en acier, l'homme de l'art connaît de nombreux procédés. Le plus simple consiste à effectuer le raccordement avec des moyens purement mécaniques tels que vis, boulons et écrous, rivets. D'autres recourent à des techniques plus élaborées telles que:

— le brasage consistant à fondre entre les pièces un métal ou un alliage à point de fusion inférieur à celui des pièces à assembler;
— le soudage au chalumeau ou sous gaz protecteur, procédé par lequel on porte à la fusion au moins une des pièces à assembler;
— le soudage par friction dans lequel la chaleur nécessaire à la fusion est fournie par une énergie de frottement;
— le soudage par ultrasons où la soudure est provoquée par l'action simultanée d'une pression et d'une énergie ultrasonore;
— le placage par laminage où la liaison est assurée au moyen de la pression et de la déformation exercée par les cylindres de laminoirs;
— le placage par explosion qui recourt à l'action de la pression développée par l'onde de choc d'une explosion.

Tous ces procédés présentent des inconvénients :

— les procédés d'assemblage mécanique conduisent, du fait des phénomènes de dilatation, à des jeux entre pièces et à une oxydation préjudiciable à une bonne conductibilité électrique;
— les procédés de soudage par fusion s'accompagnent le plus souvent de l'apparition de composés intermétalliques très fragiles;
— les procédés de placage nécessitent des matériels développant des pressions de plusieurs centaines de MPa et d'un coût élevé; de plus, dans le cas particulier du laminage, les assemblages doivent être réalisés en grande série, se prétent mal aux placages partiels, et sont généralement limités aux sections rectangulaires;
— les procédés de placage par explosion font appel à une technique chère et difficile; de plus, ils s'appliquent à des produits d'épaisseur limitée.

L'homme de l'art connaît également par le AU-B-474 203 un procédé d'assemblage aluminium-acier dans lequel on interpose entre les pièces à assembler des grains de silicium. Mais ce procédé possède les inconvénients des procédés de placage.

C'est pourquoi, la demanderesse, cherchant à parer à ces difficultés, a trouvé et mis au point un procédé d'assemblage par pressage à chaud sous faible pression permettant de réaliser, de façon rapide et économique, avec un matériel simple, un assemblage aluminium-acier qui présente à la fois:

— une conductibilité électrique compatible avec son utilisation dans le transport des courants de forte intensité,
— une résistance mécanique de la jonction équivalente à celle de l'aluminium,
— une bonne stabilité dans le temps

autant d'avantages qui sont maintenus dans une gamme de températures allant de au moins −200°C à au moins +450°C et qui en font un procédé compétitif.

Ce procédé d'assemblage par pressage à chaud est caractérisé en ce que, après préparation des surfaces à assembler par des procédés connus, la surface de la pièce à assembler en acier présente un film métallique jouant le rôle de couche barrière, on met, avant pressage, entre lesdites surfaces à assembler des grains de silicium destinés à former un eutectique, on protège ces dernières contre l'oxydation, on traite les pièces de façon à atteindre au niveau de l'interface une température comprise entre 500 et 650°C conduisant ainsi à la fusion de l'eutectique et une pression entre 2 et 20 MPa pour expulser au moins une partie de l'eutectique formé, et, enfin, on procède à un refroidissement de l'ensemble.

Ainsi, les surfaces à assembler sont d'abord préparées selon des moyens connus de façon à les rendre aptes à l'application du procédé. Cela consiste à les rendre jointives par exemple par usinage et à les débarrasser par brossage, sablage, décapage et dégraissage des souillures qui nuiraient à leur adhérence.

La première caractéristique du procédé selon l'invention consiste en ce que la surface à assembler de la pièce en acier présente un film métallique jouant le rôle de couche barrière. Cette couche barrière diminue la vitesse de formation des composés intermétalliques fragiles entre aluminium et fer, et sert de relais dans l'adhérence des faces.

Lorsque la pièce à assembler est constituée d'un acier allié par exemple de composition telle qu'elle forme par elle-même une couche barrière, elle peut être soumise directement au dépôt de silicium et au traitement de pressage à chaud. Il en est ainsi, par exemple, dans le cas de l'acier inoxydable répondant, suivant les normes françaises à la désignation Z10CN 18-09.

Lorsque la pièce à assembler est constituée d'un acier ne formant pas par lui-même une couche barrière, on la revêt d'un film métallique. Cette métallisation préalable est obtenue suivant des méthodes connues comme le dépôt chimique ou électrochimique, la projection, le trempé, ou encore, le dépôt en phase vapeur. Les métaux utilisés sont, par exemple, le chrome, le nickel, l'argent, l'or, le tungstène, le molybdène, le vanadium et leurs alliages. Ce revêtement peut être composé d'un seul métal ou de la superposition de plusieurs couches de métaux différents tels que, par exemple, le chrome et le nickel.

L'épaisseur du revêtement est, de préférence, comprise entre 1 et 3 $\mu$m. Ce revêtement est conçu de telle façon qu'il limite l'oxydation avant et au cours du réchauffage, joue le rôle de couche barrière.

La deuxième caractéristique du procédé selon l'invention, consiste à mettre, avant pressage, entre les surfaces à assembler des grains de silicium destinés à former un eutectique.

Ces grains ont des dimensions variées, mais, de préférence, comprises entre 30 et 300 $\mu$m et sont disposés de façon à réaliser à l'interface une couche d'épaisseur moyenne régulière.

Cette épaisseur peut varier. Toutefois, il est préférable d'avoir une épaisseur voisine de 300 $\mu$m. Ces grains peuvent être mis tels quels ou préalablement enchassés dans l'une quelconque des faces à assembler ou dans une tôle d'aluminium ou encore dispersés dans une matière organique solide ou liquide, volatile en-dessous de 500°C, comme le camphre par exemple, de façon à former une feuille d'épaisseur convenable et de contour semblable et voisin de celui des faces à assembler. Ces grains, en raison de leur dureté et de leur forme anguleuse, provoquent, sous l'effet de la pression, un perçage de la couche d'oxyde présente à la surface de l'aluminium, et, facilitant sa fragmentation, permettent, sous l'action de la température, la formation avec ce métal d'un eutectique liquide qui est expulsé totalement ou partiellement lorsque les pièces à assembler sont rapprochées l'une de l'autre. L'expulsion de cet eutectique est très favorable à l'adhérence des surfaces entre elles car elle a pour fonction d'entraîner à l'extérieur de l'interface d'éventuelles souillures, et, en particulier, les particules d'oxyde de l'aluminium, jouant ainsi le rôle d'agent de nettoyage.

La troisième caractéristique du procédé selon l'invention consiste à protéger les surfaces à assembler contre l'oxydation, notamment lors du réchauffage et, en particulier, de la surface de la pièce en acier car le silicium n'a pas sur cette dernière la même action que sur la face aluminium.

Plusieurs possibilités de lutte contre l'oxydation sont applicables.

L'une consiste à limiter les échanges gazeux entre l'interface et le milieu ambiant au moyen d'un écran. Cet écran peut être obtenu:

- en rapportant un joint à la périphérie dudit interface. Ce joint a, de préférence, une section circulaire, trapézoïdale ou triangulaire et est constitué d'une matière fusible au-dessous de 650°C; ce peut être, par exemple, de l'étain ou de l'arbal, alliage à 95% de zinc et 5% d'aluminium;
- en usinant ou déformant l'une quelconque des faces à assembler, de façon à créer sur son pourtour une partie en relief qui a, de préférence, une section triangulaire ou trapézoïdale;
- en emballant les pièces au voisinage de l'interface dans une feuille métallique mince telle que, par exemple, une feuille d'aluminium d'épaisseur 70 $\mu$m.

Une autre possibilité de protection contre l'oxydation repose sur l'exécution de l'assemblage dans une atmosphère non oxydante qu'on réalise, par exemple, avec des moyens connus tels que : capotage, balayage par gaz inerte, vide ou emploi de getters.

Une autre encore consiste à chauffer rapidement les pièces, par exemple, en utilisant à cette fin des fours à induction et des fours ventilés au lieu de fours statiques de façon à obtenir, de préférence, des vitesses de chauffage supérieures à 20°C/minute. Par ailleurs, il faut ajouter que le revêtement métallique de la partie acier peut contribuer également, de par sa composition, à limiter cette oxydation, ce qui est le cas du chrome en particulier.

La quatrième caractéristique de l'invention consiste à traiter les pièces de façon à atteindre au niveau de l'interface une température comprise entre 500°C et 650°C et une pression entre 2 et 20 MPa pour expulser au moins une partie de l'eutectique formé. Le fait de porter cette interface dans le domaine de température indiqué conduit à la fusion de l'eutectique décrit dans la deuxième caractéristique. Le réchauffage nécessaire pour arriver à ce résultat peut être appliqué soit séparément sur chacune des pièces à assembler, soit sur l'ensemble. Dans le cas du chauffage séparé des pièces, les surfaces peuvent avoir des températures différentes.

Lorsque l'on a atteint la température comprise entre 500°C et 650°C, à l'interface, l'ensemble est mis sous pression. Comme on l'a vu plus haut, cette opération a pour but de rapprocher les faces à relier et de provoquer ainsi le perçage de la couche d'oxyde d'alumine par les grains de silicium, l'expulsion partielle ou totale de l'eutectique à l'état liquide et l'élimination des particules d'oxyde qui nuisent à l'obtention d'une bonne adhérence.

Ce pressage s'effectue à des valeurs de pression qui peuvent varier dans de larges limites entre 2 et 20 MPa et est exercé pendant une durée qui peut varier dans de larges limites, mais peut être par exemple inférieure à 1 minute.

Selon une variante de l'invention, on peut, dans le cas où les pièces sont chauffées ensemble, appliquer une pression avant ou pendant leur chauffage; ceci permet de diminuer l'espace entre faces à assembler, d'améliorer l'étanchéité et, également, d'incruster les grains de silicium dans la surface d'aluminium.

La mise sous pression est obtenue, par exemple, au moyen d'une presse classique.

Après application des moyens ainsi décrits, on procède au refroidissement de l'ensemble. Celui-ci est réalisé, de préférence, en deux temps: d'abord rapide entre la température maximum et 450°C, c'est-à-dire avec une vitesse supérieure à 20°C par minute, puis lent jusqu'à 200°C.

En variante, on peut introduire entre les deux phases un palier vers 450°C pendant une heure.

Cette façon de procéder permet, au cours de la première phase, de limiter la formation d'intermétalliques à l'interface dont la présence conduirait à une fragilisation de la liaison et, au cours du palier et de la deuxième phase, d'assurer un traitement thermique de consolidation et de résorber les contraintes crées par les contractions différentes des pièces.

L'obtention de ces conditions de refroidissement se fait par les moyens classiques, par exemple accélération par échange avec un fluide, ralentissement par maintien en léger chauffage ou calorifugeage.

Au cours du refroidissement, on maintient de préférence une pression; cette pression peut être inférieure à celle exercée lors du pressage.

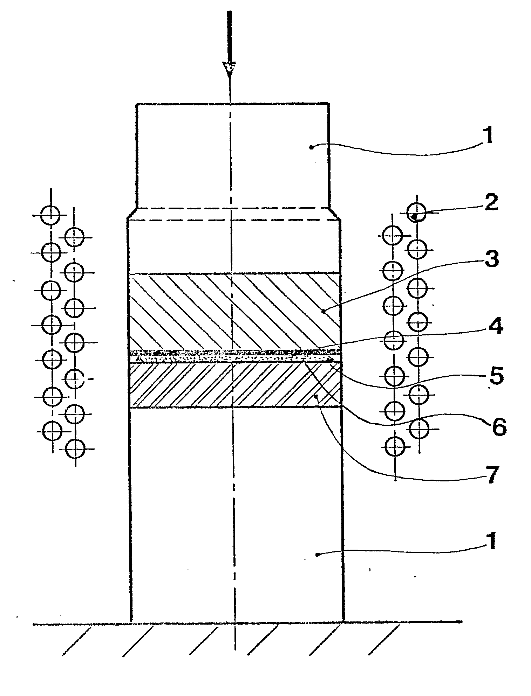

La présente invention sera mieux comprise à l'aide de la figure unique qui représente un ensemble aluminium-grains de silicium-acier disposé dans un type d'environnement de pressage et de chauffage. On y voit, en coupe, les moyens de poussée (1) d'une presse, la trace d'un inducteur (2) servant au chauffage, une piece en acier (3) avec revêtement (4), un joint (5) de section triangulaire, des grains de silicium (6) et une pièce en aluminium (7). L'orientation de cette figure n'est nullement limitative car le pressage peut être réalisé suivant une direction quelconque: verticale, horizontale ou oblique.

Une série de cinq exemples, rassemblés dans le tableau suivant, illustre l'invention par la description de quelques uns des moyens mis en oeuvre et des résultats obtenus.

Ces résultats portent sur des essais de traction pour lesquels on établit une comparaison entre la charge de rupture de l'assemblage et celle de l'aluminium 1050, et on indique s'il y a eu rupture à l'interface ou dans le métal le moins résistant (aluminium) et ceci à la fois pour l'assemblage à l'état brut de réalisation et pour l'assemblage ayant subi ultérieurement un traitement thermique pendant une heure à 560°C de façon à simuler le vieillissement lors d'une utilisation en température.

Ces résultats portent aussi sur des essais de pliage à angle droit sur un rayon de 4 mm de plaquettes de 4 mm d'épaisseur traitées thermiquement ou non et pour lesquels in précise de même s'il y a eu rupture ou non au niveau de l'interface.

Tous ces exemples, qui ne sont pas limitatifs, concernent des assemblages constitués d'une part, de pièces en aluminium type 1050, d'autre part, de pièces en acier du type inox Z10CN 18-09 pour l'exemple 1 et 1008 (suivant norme SAE) pour les autres, ce qui correspond à un acier ordinaire contenant moins de 0,1% de carbone.

| | Exemples N° | 1 | 2 | 3 |
|---|---|---|---|---|
| **Matieres utilisees** | Nature des pièces<br>Aluminium<br>Acier | 1050<br>Z10CN 18−19 | 1050<br>1008 | 1050<br>1008 |
| | Dimension des pièces (mm)<br>Aluminium<br>Acier | ⌀ 97 ép. 20<br>⌀ 100 ép. 38 | ⌀ 85 ép. 20<br>⌀ 85 ép. 38 | ⌀ 97 ép. 20<br>⌀ 97 ép. 38 |
| | Revêtement acier | néant | nickelage<br>ép. 2 $\mu$m | chromage<br>ép. 0,2−0,3 $\mu$m<br>nickelage<br>ép. 2−3 $\mu$m |
| | Silicium<br>ép. couche (mm)<br>granulométrie ($\mu$m) | <0,5<br>100 à 315 | <0,5<br>100 à 315 | <0,5<br><100 |
| **Realisation** | Protection contre l'oxydation | écran | écran | écran |
| | Chauffage<br>Vitesse (°C/mn)<br>Pression (MPa) | 50<br>4 | 100<br>3 | 100<br>3 |
| | Pressage<br>durée (seconde)<br>pression (MPa) | 15<br>14 | 5<br>14 | 5<br>14 |
| | Refroidissement<br>− jusqu'à 450° durée (mn)<br>   pression (MPa)<br>− de 450°C à 200°C durée (mn) | 7<br>9<br>30 | 7<br>9<br>30 | 6<br>8<br>20 |
| **Caracteristiques** | Essai de traction<br>− à l'état brut<br><br>− après traitement | striction dans l'aluminium<br>striction dans l'aluminium | striction ds l'aluminium<br>rupture à l'interface | striction ds l'aluminium<br>rupture plus fréquente ds l'aluminium |
| | Essai de pliage à 90°<br>− à l'état brut<br>− après traitement | non effectué<br>non effectué | non effectué<br>non effectué | pas de rupture<br>rupture |

| | Exemples N° | 4 | 5 |
|---|---|---|---|
| **Matieres utilisees** | Nature des pièces | | |
| | Aluminium | 1050 | 1050 |
| | Acier | 1008 | 1008 |
| | Dimension des pièces (mm) | | |
| | Aluminium | ⌀ 85 ép. 20 | ⌀ 95 ép. 20 |
| | Acier | ⌀ 85 ép. 38 | ⌀ 95 ép. 38 |
| | Revêtement | | |
| | Acier | chromage ép. 1−2 ɥm | chromage ép. 1−2 ɥm |
| | Silicium | | |
| | ép. Couche (mm) | <0,5 | <0,5 |
| | granulométrie (ɥm) | <100 | <100 |
| **Realisation** | Protection contre l'oxydation | écran | écran |
| | Chauffage | | |
| | Vitesse (°C/mn) | 100 | 20 |
| | Pression (MPa) | 4 | inconnue, bridage mécanique |
| | Pressage | | |
| | Durée (seconde) | 5 | 3 |
| | Pression (MPa) | 15 | inconnue, pressage sur butées |
| | Refroidissement | | |
| | − jusqu'à 450°C durée (mn) | 6 | 3 |
| |    pression (MPa) | 8 | 0 |
| | − de 450°C à 200°C durée (mn) | 20 | 6 |
| **Caracteristiques** | Essai de traction | | |
| | − à l'état brut | striction dans l'aluminium | non effectué |
| | − après traitement | striction dans l'aluminium | non effectué |
| | Essai de pliage à 90° | | |
| | − à l'état brut | rupture fréquente | pas de rupture |
| | − après traitement | pas de rupture | pas de rupture |

Ces exemples font apparaître que l'assemblage réalisé supporte des charges correspondant à la charge de rupture de la pièce en aluminium et que, dans la plupart des cas, la rupture intervient non pas au niveau de l'interface, mais sur la pièce en aluminium elle-même ; de plus, les exemples 3, 4 et 5 montrent qu'un pliage à 90° peut être effectué sur plaquette sans qu'il y ait rupture au niveau de l'interface.

Ainsi l'invention permet, en opérant à des températures modérées, en exerçant des pressions relativement faibles pendant des périodes de temps relativement courtes, de ne nécessiter que des moyens de chauffage et de compression simples, pour obtenir des assemblages présentant une excellente adhérence, même après vieillissement accéléré, ce qui se traduit par une résistance à la traction et au pliage et une conductance électrique bonnes dans des conditions d'utilisation en continu à des températures allant de au moins −200°C à au moins +450°C.

Autant de caractéristiques qui en font un procédé général, simple, rapide et économique auquel on peut soumettre toutes les formes de pièces: plaques, tôles, barres, ronds, tiges de diamètre allant de 1/10 mm à plusieurs décimètres et qui trouvent leur application dans un large domaine allant, à titre d'exemple, du raccordement électrique des cuves d'électrolyse au réseau d'alimentation, aux divers placages totaux ou partiels servant de protection ou de blindage.

**Revendications**

1. Procédé d'assemblage par pressage à chaud d'une pièce à base d'aluminium et d'une pièce en acier dont les surfaces à assembler ont été préalablement préparées par des procédés connus, caractérisé en ce que la surface de la pièce en acier présente un film métallique jouant le rôle de couche barrière, on met avant pressage entre les surfaces à assembler des grains de silicium destinés à former un eutectique, on protège ces dernières contre l'oxydation, on traite les pièces de façon à atteindre, au niveau de l'interface, une température comprise entre 500°C et 650°C conduisant ainsi à la fusion de l'eutectique et une pression entre 2 et 20 MPa pour expulser au moins une partie de l'eutectique formé et enfin, on procède à un refroidissement de l'ensemble.

2. Procédé d'assemblage selon la revendication 1, caractérisé en ce que, lorsque l'acier est susceptible de former avec l'aluminium un composé intermétallique fragile, la présence du film métallique est obtenue par revêtement de la surface à assembler de la pièce en acier avant de mettre des grains de silicium.

3. Procédé d'assemblage selon la revendication 2, caractérisé en ce que le film métallique formant le revêtement de la surface à assembler de la pièce en acier se compose d'au moins un métal appartenant au groupe constitué par le chrome, le nickel, l'argent, l'or, le tungstène, le molybdène, le vanadium.

4. Procédé d'assemblage selon la revendication 1, caractérisé en ce que les grains de silicium ont, des dimensions comprises entre 30 et 300 µm.

5. Procédé d'assemblage selon la revendication 1, caractérisé en ce que les grains de silicium sont disposés de façon à former une couche d'épaisseur voisine de 300 µm.

6. Procédé d'assemblage selon la revendication 1, caractérisé en ce que les grains de silicium sont enchassés dans l'une quelconque des surfaces à assembler.

7. Procédé d'assemblage selon la revendication 1, caractérisé en ce que, avant assemblage, les grains de silicium sont dispersés dans une matière organique volatile en-dessous de 500°C de façon à former une feuille de contour semblable et voisin de celui de l'interface.

8. Procédé d'assemblage selon la revendication 1, caractérisé en ce que la protection contre l'oxydation est obtenue par mise en place sur le pourtour de l'interface d'un écran appartenant au groupe constitué par le joint rapporté, le joint usiné, la feuille mince.

9. Procédé d'assemblage selon la revendication 1, caractérisé en ce que la protection contre l'oxydation est obtenue en opérant en atmosphère non oxydante.

10. Procédé d'assemblage selon la revendication 1, caractérisé en ce que la température au niveau de l'interface est atteinte à partir de la température ambiante avec une vitesse, supérieure à 20°C/minute.

11. Procédé d'assemblage selon la revendication 1, caractérisé en ce que, durant le traitement, pour atteindre au niveau de l'interface une température comprise entre 500°C et 650°C, on exerce une pression qui peut varier entre 2 et 20 MPa.

12. Procédé d'assemblage selon la revendication 1, caractérisé en ce que les pièces à assembler sont réchauffées séparément.

13. Procédé d'assemblage selon la revendication 1, caractérisé en ce que, lorsque l'interface a une température comprise entre 500°C et 650°C, on exerce une pression comprise entre 2 et 20 MPa et pendant moins de 1 minute.

14. Procédé d'assemblage selon la revendication 1, caractérisé en ce que le refroidissement s'effectue jusqu'à une température de 450°C, avec une vitesse supérieur à 20°C par minute.

15. Procédé d'assemblage selon la revendication 14, caractérisé en ce qu'on maintient pendant une heure à 450°C avant le retour à la température ambiante.

16. Procédé d'assemblage selon la revendication 1, caractérisé en ce que, au cours du refroidissement, on maintient une pression qui peut être inférieure à celle exercée lors du pressage.

## Patentansprüche

1. Warmpreßverbindungsverfahren von einem Teil auf Aluminiumbasis und einem Teil aus Stahl, deren zu verbindende Oberflächen vorab nach bekannten Verfahren vorbereitet wurden, dadurch gekennzeichnet, daß die Oberfläche das Teils aus Stahl als Sperrschicht wirkenden einen metallischen Film aufweist, man vor dem Pressen zwischen die zu verbindenden Oberflächen zur Bildung eines Eutektikums Siliziumkörner legt, diese letzteren gegen die Oxydation schützt, die Teile derart behandelt, um auf Höhe der Grenzfläche eine zum Schmelzen des Eutektikums zwischen 500°C und 600°C liegende Temperatur und einen zum Austreiben wenigstens eines Teils des gebildeten Eutektikums zwischen 2 und 20 MPa Druck zu erreichen, und schließlich das Ganze abkühlt.

2. Verbindungsverfahren nach Anspruch 1, dadurch gekennzeichnet, daß man, wenn der Stahl zur Bildung einer spröden intermetallischen Verbindung mit dem Aluminium neigt, um die Aufweisung von einem metallischen Film zu erreichen, die zu verbindende Oberfläche des Teils aus Stahl vor dem Legen der Siliziumkörner überzieht.

3. Verbindungsverfahren nach Anspruch 2, dadurch gekennzeichnet, daß sich der den Überzug der zu verbindenden Oberfläche des Teils aus Stahl bildende metallische Film aus wenigstens einem zu der aus Chrom, Nickel, Silber, Gold, Wolfram, Molybdän, Vanadin bestehenden Gruppe gehörenden Metall zusammensetzt.

4. Verbindungsverfahren nach Anspruch 1, dadurch gekennzeichnet, daß die Siliziumkörner zwischen 30 und 300 µm liegende Abmessungen haben.

5. Verbindungsverfahren nach Anspruch 1, dadurch gekennzeichnet, daß die Siliziumkörner derart angeordnet werden, um eine Schicht einer Dicke nahe 300 µm zu bilden.

6. Verbindungsverfahren nach Anspruch 1, dadurch gekennzeichnet, daß die Siliziumkörner in irgendeine der zu verbindenden Oberflächen eingepaßt werden.

7. Verbindungsverfahren nach Anspruch 1, dadurch gekennzeichnet, daß die Siliziumkörner vor dem Verbindungsvorgang in einem organischen, unter 500°C flüchtigen Stoff derart dispergiert werden, um eine Folie geeigneter Dicke und der der Grenzfläche ähnlicher und naher Kontur zu bilden.

8. Verbindungsverfahren nach Anspruch 1, dadurch gekennzeichnet, daß der Schutz gegen die Oxydation durch Anbringung eines zur aus der Anstückdichtung, der Fertigdichtung und der dünnen Folie bestehenden Gruppe gehörenden Schirms am Umfang der Grenzfläche erhalten wird.

9. Verbindungsverfahren nach Anspruch 1, dadurch gekennzeichnet, daß der Schutz gegen die Oxydation durch Arbeiten in nicht oxydierender Atmosphäre erhalten wird.

10. Verbindungsverfahren nach Anspruch 1, dadurch gekennzeichnet, daß die Temperatur auf der Höhe der Grenzfläche von der Umgebungstemperatur aus mit einer Geschwindigkeit von über 20°C/Minute erreicht wird.

11. Verbindungsverfahren nach Anspruch 1, dadurch gekennzeichnet, daß man während der Behandlung zum Erreichen einer Temperatur zwischen 500°C und 650°C auf der Höhe der Grenzfläche gleichzeitig einen Druck ausübt, der zwischen 2 und 20 MPa variieren kann.

12. Verbindungsverfahren nach Anspruch 1, dadurch gekennzeichnet, daß die zu verbindenden Teile getrennt erhitzt werden.

13. Verbindungsverfahren nach Anspruch 1, dadurch gekennzeichnet, daß man, wenn die Grenzfläche eine Temperatur zwischen 500°C und 650°C hat, einen Druck zwischen 2 und 20 MPa und während weniger als 1 Minute ausübt.

14. Verbindungsverfahren nach Anspruch 1, dadurch gekennzeichnet, daß die Abkühlung bis zu einer Temperatur von 450°C mit einer Geschwindigkeit über 20°C je Minute erfolgt.

15. Verbindungsverfahren nach Anspruch 14, dadurch gekennzeichnet, daß die Temperatur von 450°C während einer Stunde vor der Rückkehr zur Umgebungstemperatur gehalten wird.

16. Verbindungsverfahren nach Anspruch 1, dadurch gekennzeichnet, daß man im Lauf der Abkühlung einen Druck beibehält, der niedriger als der beim Pressen ausgeübte sein kann.

## Claims

1. A process for the assembly by hot pressing of an aluminium-based member and a steel member whose surfaces to be assembled have been previously prepared by known processes, characterised in that the surface of the steel member presents a metal film acting as a barrier layer, before the pressing operation, grains of silicon are placed between the surfaces to be assembled permitting the formation of an eutectic, the surfaces are protected from oxidation, the members are treated so as to achieve at the interface a temperature of from 500°C to 650°C resulting in fusion of the eutectic, and a pressure from 2 to 20 MPa to expel at least a part of the eutectic formed, and, finally, the assembly is cooled.

2. An assembly process according to claim 1 characterised in that, when the steel is capable of forming a fragile intermetallic compound with the aluminium, the presence of the metal film is realized by covering the assembly surface of the steel member before the grains of silicon are put in place.

3. An assembly process according to claim 2 characterised in that the metal film forming the covering on the assembly surface of the steel member comprises at least a metal belonging to the group formed by chromium, nickel, silver, gold, tungsten, molybdenum and vanadium.

4. An assembly process according to claim 1 characterised in that the grains of silicon are of sizes of from 30 to 300 $\mu$m.

5. An assembly process according to claim 1 characterised in that the grains of silicon are so disposed as to form a layer which is close to 300 $\mu$m in thickness.

6. An assembly process according to claim 1 characterised in that the grains of silicon are engrained in any one of the surfaces to be assembled.

7. An assembly process according to claim 1 characterised in that, before the assembly step, the grains of silicon are dispersed in an organic material which is volatile below a temperature of 500°C so as to form a sheet of suitable thickness and of a contour which is similar to and close to that of the interface.

8. An assembly process according to claim 1 characterised in that protection from oxidation is achieved by positioning around the circumference of the interface a screen which belongs to the group formed by a separately fitted jointing seal, a machined jointing seal and the thin sheet.

9. An assembly process according to claim 1 characterised in that protection from oxidation is achieved by operating in a non-oxidising atmosphere.

10. An assembly process according to claim 1 characterised in that the temperature at the interface is achieved, starting from ambient temperature, at a speed which is higher than 20°C/minute.

11. An assembly process according to claim 1 characterised in that, during the treatment, to achieve a temperature of from 500°C to 650°C at the interface, a pressure which may vary between 2 and 20 MPa is simultaneously applied.

12. An assembly process according to claim 1 characterised in that the members to be assembled are heated separately.

13. An assembly process according to claim 1 characterised in that, when the interface is at a temperature of from 500°C to 650°C, there is applied a pressure of from 2 to 20 MPa for a period of less than 1 minute.

14. An assembly process according to claim 1 characterised in that cooling is effected to a temperature of 450°C, at a speed which is higher than 20°C per minute.

15. An assembly process according to claim 14 characterised in that a temperature of 450°C is maintained for a period of 1 hour before returning to ambient temperature.

16. An assembly process according to claim 1 characterised in that a pressure which may be lower than that applied during the pressing step is maintained during the cooling step.